(19) **Europäisches Patentamt / European Patent Office / Office européen des brevets**

(11) **EP 4 034 344 B1**

(12) **FASCICULE DE BREVET EUROPEEN**

(45) Date de publication et mention de la délivrance du brevet:
**01.05.2024 Bulletin 2024/18**

(21) Numéro de dépôt: **20790377.4**

(22) Date de dépôt: **25.09.2020**

(51) Classification Internationale des Brevets (IPC):
**B25J 9/00** *(2006.01)*    **B62D 57/032** *(2006.01)*
**B25J 9/16** *(2006.01)*    **G06N 3/04** *(2023.01)*
**G06N 3/08** *(2023.01)*    **G06N 3/045** *(2023.01)*

(52) Classification Coopérative des Brevets (CPC):
**G06N 3/08; B25J 9/0006; B25J 9/161; B25J 9/163; B62D 57/032; G06N 3/045;** G06N 3/044; G06N 3/048

(86) Numéro de dépôt international:
**PCT/FR2020/051672**

(87) Numéro de publication internationale:
**WO 2021/058918 (01.04.2021 Gazette 2021/13)**

(54) **PROCEDES D'APPRENTISSAGE DE PARAMETRES D'UN RESEAU DE NEURONES, DE GENERATION D'UNE TRAJECTOIRE D'UN EXOSQUELETTE ET DE MISE EN MOUVEMENT DE L'EXOSQUELETTE**

VERFAHREN ZUM ERLERNEN VON PARAMETERN EINES NEURONALEN NETZES, ZUR ERZEUGUNG EINER TRAJEKTORIE EINES EXOSKELETTS UND ZUR INGANGSETZUNG DES EXOSKELETTS

METHODS FOR LEARNING PARAMETERS OF A NEURAL NETWORK, FOR GENERATING A TRAJECTORY OF AN EXOSKELETON AND FOR SETTING THE EXOSKELETON IN MOTION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2019 FR 1910649**

(43) Date de publication de la demande:
**03.08.2022 Bulletin 2022/31**

(73) Titulaire: **Wandercraft**
**75004 Paris (FR)**

(72) Inventeurs:
• **DUBURCQ, Alexis**
**75011 PARIS (FR)**
• **CHEVALEYRE, Yann**
**75012 PARIS (FR)**
• **BOERIS, Guilhem**
**75018 PARIS (FR)**

(74) Mandataire: **Regimbeau**
**20, rue de Chazelles**
**75847 Paris Cedex 17 (FR)**

(56) Documents cités:
• **THOMAS GURRIET ET AL: "Towards Variable Assistance for Lower Body Exoskeletons", ARXIV.ORG, CORNELL UNIVERSITY LIBRARY, 201 OLIN LIBRARY CORNELL UNIVERSITY ITHACA, NY 14853, 24 septembre 2019 (2019-09-24), XP081543756, DOI: 10.1109/LRA.2019.2955946**
• **XINGYE DA ET AL: "Combining Trajectory Optimization, Supervised Machine Learning, and Model Structure for Mitigating the Curse of Dimensionality in the Control of Bipedal Robots", ARXIV.ORG, CORNELL UNIVERSITY LIBRARY, 201 OLIN LIBRARY CORNELL UNIVERSITY ITHACA, NY 14853, 7 novembre 2017 (2017-11-07), XP081285789,**
• **HARIB OMAR ET AL: "Feedback Control of an Exoskeleton for Paraplegics: Toward Robustly Stable, Hands-Free Dynamic Walking", IEEE CONTROL SYSTEMS, IEEE, USA, vol. 38, no. 6, 1 décembre 2018 (2018-12-01), pages 61-87, XP011704711, ISSN: 1066-033X, DOI: 10.1109/MCS.2018.2866604 [extrait le 2018-11-14] cité dans la demande**

EP 4 034 344 B1

**Description**

DOMAINE TECHNIQUE GENERAL

La présente invention concerne le domaine des robots de type exosquelette.

Plus précisément, elle concerne des procédés d'apprentissage des paramètres d'un réseau de neurones, d'utilisation du réseau de neurones pour génération d'une trajectoire d'un exosquelette, et de mise en mouvement de l'exosquelette.

ETAT DE L'ART

Récemment, sont apparus pour les personnes avec des problèmes de mobilité importants comme les paraplégiques des dispositifs de marche assistée appelés exosquelettes, qui sont des dispositifs robotisés externes que l'opérateur (l'utilisateur humain) vient « enfiler » grâce à un système d'attaches qui lie les mouvements de l'exosquelette de ses propres mouvements. Les exosquelettes de membres inférieurs disposent de plusieurs articulations, généralement au moins au niveau des genoux et des hanches, pour reproduire le mouvement de marche. Des actionneurs permettent de mouvoir ces articulations, qui à leur tour font se mouvoir l'opérateur. Un système d'interface permet à l'opérateur de donner des ordres à l'exosquelette, et un système de commande transforme ces ordres en commande pour les actionneurs. Des capteurs viennent généralement compléter le dispositif.

Ces exosquelettes constituent une avancée par rapport aux fauteuils roulants, car ils permettent aux opérateurs de se remettre debout et de marcher. Les exosquelettes ne sont plus limités par les roues et peuvent théoriquement évoluer dans la majorité des environnements non plats : les roues, au contraire des jambes, ne permettent pas de franchir des obstacles importants comme des marches, escaliers, obstacles d'une hauteur trop importante, etc.

Cependant, dans leur usage, aucun de ces exosquelettes ne réalise une marche humaine autonome, i.e. stable et viable sur une large variété de terrains, anthropomorphe, non assistée.

Dans la plupart des cas, ces limitations se matérialisent par l'impossibilité pour le dispositif de gérer l'équilibre ou la direction de marche par lui-même. Ces deux tâches sont alors généralement transférées à l'opérateur, qui les réalise grâce à des béquilles, comme proposé par exemple dans le brevet US7153242 de Rewalk, ou dans la demande US2016038371 de Ekso-Bionics.

Le brevet EP2231096 de Rex-Bionics décrit le seul exosquelette utilisable sans aide extérieure pour une personne incapable d'assurer sa propre stabilité. Le principe de contrôle, décrit au paragraphe [0122], explicite clairement le besoin de transférer le centre de pression (le point physique correspondant à la résultante des forces de réaction exercées par le sol sur le système) d'une partie du polygone de support (l'enveloppe convexe des points de contact avec le sol) vers une autre partie du polygone de support.

Cette limitation impose une marche extrêmement lente (quelques mètres par minute, alors qu'une marche normale dépasse 2 km/h) avec des pas courts (moins de 30 cm, alors qu'une foulée normale va de 50 à 80 cm), durant laquelle le pied d'appui est constamment en contact plan avec le sol. Le type d'environnement accessible est donc limité, puisque les terrains accidentés sont exclus de fait. De même, le moindre obstacle comme un caillou, un petit objet, génère un risque de déséquilibrer le système s'il pose son pied dessus à un moment donné, et finalement de le faire tomber.

Par opposition, la marche humaine « naturelle » se caractérise par une succession de phases au cours desquelles les pieds peuvent être à plat au sol, en l'air, ou en train de rouler sur le sol. Cette capacité à dérouler le pied est primordiale pour la marche car elle permet de faire des pas plus grands et permet une stabilité sur une grande variété de terrains.

Or les exosquelettes dits de première génération décrits précédemment n'ont pas de pied actionné ou gardent le pied d'appui au sol.

Réaliser ce déroulé est en effet complexe pour des robots humanoïdes bipèdes ou des dispositifs robotisés. Lorsque le centre de pression atteint la limite du polygone de support, le système commence à rouler autour de ce point, et n'est donc plus en équilibre statique.

Dans le cas de la marche, le déroulé du pied implique une perte de contact partielle avec le sol au niveau du pied d'appui, avec plusieurs conséquences :

-    le polygone de support (la surface de sustentation) est réduit, potentiellement à un point, rendant difficile voire impossible de maintenir le centre de pression à l'intérieur du polygone de support ;
-    le système est dans une situation de sous-actionnement, c'est-à-dire qu'il ne peut plus agir sur l'ensemble de ses degrés de liberté. Tous les mouvements ne sont plus alors possibles.

Dans une telle situation, les formalismes classiques de la marche à pieds plats tels que décrits dans le document Kajita S., K. F. (2003). Biped Walking pattern génération by using preview control of Zero-Moment Point. ICRA, (pp. 1620-1626), ou le principe décrit dans le brevet Rex-Bionics EP2231096 ne peuvent plus fonctionner.

Une idée naturelle est d'amener la jambe balançant devant et de poser le deuxième pied par terre pour retrouver un polygone de support et l'équilibre, ceci alors que le système est en libre rotation autour du pied d'appui, en quelque sorte en train de « tomber ». On parle alors de marche dynamique, puisque le corps passe par une succession de postures instables, mais uniquement de façon transitoire (si on « arrêtait » la personne en plein vol elle tomberait).

Dans cette approche de la marche dynamique, amener le pied balançant rapidement dans une position qui rétablisse au moins brièvement l'équilibre est compliqué. En effet, si on fait suivre à ce pied une trajectoire paramétrée en temps pré-calculée, ce pied risque de frapper le sol trop tôt ou trop tard dû au comportement incontrôlable du système sous-actionné même soumis à de légères perturbations (on ne peut pas corriger une trajectoire qui dévierait légèrement de ce qui a été planifié). Cela peut générer de l'inconfort à l'opérateur, le déséquilibrer voir même le faire tomber, y compris sur des terrains simples.

C'est pour cela que tous les exosquelettes de première génération (et nombre de robots humanoïdes) essayent d'éviter ce genre de situation en gardant le pied d'appui à plat, avec pour conséquences les limitations susmentionnées sur la vitesse de marche, la longueur des pas, le type de terrain admissible et la stabilité générale de la marche.

Il a été par conséquent été proposé dans la demande WO2018130784 un nouveau paradigme de marche pour les exosquelettes, combinant les principes de « contraintes virtuelles » et de « Dynamique des Zéro Hybride » (HZD) permettant une marche rapide, naturelle, et sans risque de chute ou de déséquilibre même en terrain difficile et imprévu.

De façon traditionnelle, les trajectoires, c'est-à-dire les évolutions de chaque degré de liberté, sont exprimées en fonction du temps. La « dynamique » du système est définie par une fonction

$$f : \chi \times U \times R^+ \mapsto \chi$$

et un point de départ

$$\xi \in \chi$$

la fonction f s'écrivant

$$\acute{x}_t = f(x_t, u_t, t), x_0 = \xi$$

$\chi$ étant l'espace d'état de l'exosquelette 1, $U$ l'espace de contrôle, et $t$ représentant le temps.

La HZD est au contraire la dynamique des degrés de liberté non-actionnés. Cette dynamique est dite est dite « Zéro » puisqu'elle correspond aux degrés sur lesquels la commande ne peut/veut pas agir, i.e. la commande vaut 0, et « Hybride » car l'impact du pied sur le sol impose des phases instantanées discontinues qui entrecoupent les phases continues.

En méthode dite des « contraintes virtuelles », le principe est de définir pour une sélection des degrés de liberté actionnés une trajectoire paramétrée par un paramètre d'évolution non pas en temps, mais en fonction directement de la configuration, ce paramètre étant nommé variable de phase. Un exemple d'une telle variable de phase est l'angle entre l'axe talon-hanche et la verticale qui constitue alors un degré de liberté non-actionné mentionné ci-avant.

La variable de phase permet de définir « l'avancement » d'un pas. Plus précisément, à chaque pas, la variable de phase passe continûment d'une valeur initiale à une valeur finale, avant de se voir réaffecter la valeur initiale : c'est le début du pas suivant. Pour faciliter les choses, on peut normaliser la valeur du paramètre de phase entre 0 et 1.

A chaque valeur du paramètre d'évolution correspond une valeur des degrés de liberté actionnés que le système doit s'efforcer de suivre : ce sont ces relations (une pour chaque degré de liberté actionné que l'on souhaite contrôler de cette manière) qu'on nomme contraintes virtuelles.

Si le système suit exactement cette trajectoire pour les degrés de liberté sur lesquels on peut ou l'on veut agir, en d'autres termes si les contraintes virtuelles sont respectées pour ces degrés de liberté, alors l'évolution du système est totalement déterminée par celle des degrés de liberté non-actionnés qui suivent leur propre dynamique qui est la HZD.

Un bon choix des contraintes virtuelles peut ainsi amener cette dynamique à contenir une « orbite » périodique attractive, i.e. une trajectoire stable vers laquelle le système est attiré naturellement.

Cette méthode HZD apporte grande satisfaction, mais la difficulté réside dans la génération des trajectoires (c'est d'ailleurs également le cas dans la méthode « pieds plats »). En effet, une trajectoire donnée est associée à des « caractéristiques » de la marche, telles que la longueur des pas, la fréquence de marche et l'inclinaison du buste, mais également hauteur des marches en cas de franchissement d'escaliers, l'angle de rotation instantané pour les mouvements courbes, ou encore la position du centre de masse et le débattement latéral du buste dans le cadre d'activité de rééducation, et doit être stable. Si les caractéristiques de la marche changent il faut une nouvelle trajectoire.

Aujourd'hui, il n'existe pas de solution permettant de générer en temps réel une trajectoire, il est nécessaire de les précalculer et les tester, et ce pour plusieurs raisons :

- L'algorithme de génération de trajectoire actuel repose sur une méthode d'optimisation pour problèmes non-convexes non-linéaires sous contraintes. Ce type d'algorithmes ne possède pas de garantie de convergence. Il est donc impossible d'affirmer être en mesure d'obtenir une trajectoire pour des caractéristiques de marche désirées, même en se restreignant à un espace de recherche mathématiquement compacte.

- La résolution de tels problèmes non-linéaires non-convexes sous contraintes s'avère complexe et nécessite une puissance de calcul importante. Il faut environ 90s de temps de calcul par trajectoire par coeur physique sur un ordinateur haut de gamme, alors qu'il faudrait que ce temps soit de l'ordre de 100 µs pour envisager un fonctionnement temps réel.

- Actuellement les calculs sont réalisés sur un serveur distant puis les résultats sont transférés par internet, ce qui contraint les utilisateurs de l'exosquelette à disposer d'une connexion stable permanente, ce qui représente un désagrément significatif pour une utilisation dans la vie quotidienne.

Ainsi, il serait souhaitable de disposer d'une nouvelle solution de génération de trajectoires qui puisse enfin être mise en oeuvre en temps réel, et ce sans le moindre risque pour l'opérateur de l'exosquelette.

PRESENTATION DE L'INVENTION

La présente invention se rapporte ainsi selon un premier aspect à un procédé d'apprentissage de paramètres d'un réseau de neurones pour génération de trajectoires d'un exosquelette, le procédé comprenant la mise en oeuvre par des moyens de traitement de données d'un premier serveur, d'étapes de :

(a) Apprentissage des paramètres d'un premier réseau de neurones apte à générer des trajectoires élémentaires périodiques de l'exosquelette chacune pour une marche donnée de l'exosquelette définie par un n-uplet de paramètres de marche, en fonction d'une première base de données d'apprentissage de trajectoires périodiques pour un ensemble de marches possibles de l'exosquelette ;

(b) Apprentissage, à partir des paramètres du premier réseau de neurones, des paramètres d'un deuxième réseau de neurones apte à générer des trajectoires élémentaires périodiques de l'exosquelette et des transitions d'une trajectoire élémentaire périodique de l'exosquelette à une autre trajectoire élémentaire périodique de l'exosquelette, en fonction d'une deuxième base de données d'apprentissage de trajectoires périodiques élémentaires et de transitions pour un ensemble de marches possibles de l'exosquelette.

Selon d'autres caractéristiques avantageuses et non limitatives :
L'étape (a) comprend la construction de ladite première base de données d'apprentissage de trajectoires périodiques pour un ensemble de marches possibles de l'exosquelette en utilisant un algorithme d'optimisation.

Ledit ensemble de marches possibles de l'exosquelette est choisi de sorte à couvrir uniformément l'espace dans lequel est à valeur ledit n-uplet de paramètres de marche.

L'étape (a) comprend en outre la vérification d'un critère représentatif de la fidélité des prédictions du premier réseau de neurones, et si ce critère n'est pas vérifié l'étape (a) est répétée.

L'étape (b) comprend la construction de ladite deuxième base de données d'apprentissage de trajectoires périodiques et de transitions pour un ensemble de marches possibles de l'exosquelette à partir de la première base de données d'apprentissage.

Ladite deuxième base de données comprend toutes les transitions d'une trajectoire élémentaire périodiques de l'exosquelette de la première base de données d'apprentissage à une autre trajectoire élémentaire périodiques de l'exosquelette de la première base de données d'apprentissage.

Chaque transition d'une trajectoire élémentaire périodique de l'exosquelette, dite trajectoire périodique élémentaire initiale, à une autre trajectoire élémentaire périodique de l'exosquelette, dite trajectoire périodique élémentaire finale, est définie comme une séquence de trajectoires élémentaires périodiques comprenant successivement la trajectoire périodique élémentaire initiale, au moins une trajectoire périodique élémentaire intermédiaire, et la trajectoire périodique élémentaire finale, la construction de la deuxième base de données comprenant, pour chaque couple d'une trajectoire périodique élémentaire initiale et d'une trajectoire périodique finale de la première base de données d'apprentissage, la détermination de l'au moins une trajectoire périodique élémentaire intermédiaire.

Chaque trajectoire périodique élémentaire intermédiaire entre une trajectoire périodique élémentaire initiale et une trajectoire périodique finale est un mélange linéaire desdites trajectoires périodiques élémentaires initiale et finale.

La détermination de l'au moins une trajectoire périodique élémentaire intermédiaire pour un couple d'une trajectoire périodique élémentaire initiale et d'une trajectoire périodique finale utilise un algorithme dit de plus court chemin de la trajectoire périodique élémentaire initiale à la trajectoire périodique finale dans un graphe de trajectoires périodiques élémentaires tel que le coût pour passer d'une trajectoire périodique élémentaire à une autre est représentatif d'une inconsistance de la dynamique de l'exosquelette.

L'étape (b) comprend en outre la vérification d'un critère représentatif de la fidélité des prédictions du deuxième réseau de neurones, et si ce critère n'est pas vérifié l'étape (b) est répétée.

Selon un deuxième aspect, l'invention concerne un procédé de génération d'une trajectoire d'un exosquelette comprenant des étapes de :

(c) stockage sur une mémoire d'un deuxième serveur des paramètres d'un deuxième réseau de neurones appris au moyen d'un procédé d'apprentissage de paramètres d'un réseau de neurones pour génération de trajectoires de l'exosquelette selon le premier aspect ;

(d) génération d'une trajectoire de l'exosquelette par des moyens de traitement de données du deuxième serveur en utilisant ledit deuxième réseau de neurones.

Selon d'autres caractéristiques avantageuses et non limitatives :

Ledit exosquelette reçoit un opérateur humain, l'étape (d) comprenant la détermination d'une séquence de n-uplets de paramètres de marche de l'exosquelette souhaitée par ledit opérateur, et la trajectoire de l'exosquelette est générée en fonction de ladite séquence de n-uplets.

La trajectoire générée de l'exosquelette comprend pour chaque n-uplet de ladite séquence une nouvelle trajectoire périodique élémentaire et une transition vers cette nouvelle trajectoire périodique élémentaire.

Selon un troisième aspect, l'invention concerne un procédé de mise en mouvement d'un exosquelette présentant une pluralité de degrés de liberté dont au moins un degré de liberté actionné par un actionneur commandé par des moyens de traitement de données comprenant une étape (e) d'exécution par les moyens de traitement de données de l'exosquelette d'une trajectoire de l'exosquelette générée au moyen du procédé de génération d'une trajectoire de l'exosquelette selon le deuxième aspect, de sorte à faire marcher ledit exosquelette.

Selon un quatrième aspect, l'invention concerne un système comprenant un premier serveur, un deuxième serveur et un exosquelette comprenant chacun des moyens de traitement de données, caractérisé en ce que lesdits moyens de traitement de données sont configurés pour mettre en oeuvre un procédé selon le premier aspect d'apprentissage de paramètres d'un réseau de neurones pour génération de trajectoires de l'exosquelette, un procédé selon le deuxième aspect de génération d'une trajectoire de l'exosquelette, et/ou un procédé selon le troisième aspect de mise en mouvement d'un exosquelette.

Selon un cinquième et un sixième aspects, l'invention concerne un produit programme d'ordinateur comprenant des instructions de code qui, lorsque le programme est exécuté sur un premier serveur, conduisent celui-ci à exécuter les étapes du procédé selon le premier aspect d'apprentissage de paramètres d'un réseau de neurones pour génération de trajectoires d'un exosquelette, lorsque le programme est exécuté sur un deuxième serveur, conduisent celui-ci à exécuter les étapes du procédé selon le deuxième aspect de génération d'une trajectoire d'un exosquelette, et/ou lorsque le programme est exécuté par des moyens de traitement de données de l'exosquelette, conduisent celui-ci à exécuter les étapes du procédé selon le troisième aspect de mise en mouvement d'un exosquelette ; et

un moyen de stockage lisible par un équipement informatique sur lequel un produit programme d'ordinateur comprend des instructions de code qui, lorsque le programme est exécuté sur un premier serveur, conduisent celui-ci à exécuter les étapes du procédé selon le premier aspect d'apprentissage de paramètres d'un réseau de neurones pour génération de trajectoires d'un exosquelette, lorsque le programme est exécuté sur un deuxième serveur, conduisent celui-ci à exécuter les étapes du procédé selon le deuxième aspect de génération d'une trajectoire d'un exosquelette, et/ou lorsque le programme est exécuté par des moyens de traitement de données de l'exosquelette, conduisent celui-ci à exécuter les étapes du procédé selon le troisième aspect de mise en mouvement d'un exosquelette.

## PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

La figure 1 est un schéma d'une architecture pour la mise en oeuvre des procédés selon l'invention ;
La figure 2 est un schéma d'un exosquelette utilisé par les procédés selon l'invention ;
La figure 3 est un schéma de réseau de neurones utilisé dans les procédés selon l'invention ;
La figure 4 est un diagramme illustrant un mode de réalisation préféré des procédés selon l'invention.

## DESCRIPTION DETAILLEE

*Architecture*

Selon trois aspects complémentaires de l'invention, sont proposés :

- un procédé d'apprentissage de paramètres d'un réseau de neurones, en particulier de type « à propagation avant » (FNN, « Feedforward Neural Network ») pour génération de trajectoire d'un exosquelette 1 ;
- un procédé de génération d'une trajectoire d'un exosquelette 1 (utilisant un réseau de neurone, avantageusement appris grâce au procédé susmentionné) ; et
- un procédé de mise en mouvement d'un exosquelette 1 (appliquant une trajectoire générée grâce au procédé selon le deuxième aspect).

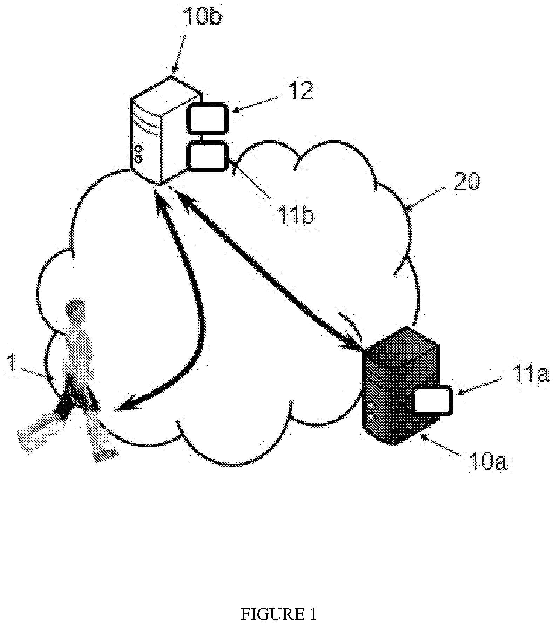

Ces trois types de procédés sont mis en oeuvre au sein d'une architecture telle que représentée par la **figure 1**, grâce à un premier et/ou un deuxième serveur 10a, 10b. Le premier serveur 10a est le serveur d'apprentissage (mettant en oeuvre du premier procédé) et le deuxième serveur 10b est un serveur de génération de trajectoire (mettant en oeuvre le deuxième procédé). Il est tout à fait possible que ces deux serveurs soient confondus, mais en pratique le premier serveur 10a est un serveur distant alors que le deuxième serveur 10b peut être embarqué par l'exosquelette 1 pour fonctionnement en temps réel.

Chacun de ces serveurs 10a, 10b est typiquement un équipement informatique relié à un réseau étendu 20 tel que le réseau internet pour l'échange des données, même si en pratique une fois le réseau de neurone appris et embarqué sur le deuxième serveur 10b la communication peut être interrompue, du moins par intermittence. Chacun comprend des moyens de traitement de données 11a, 11b de type processeur (en particulier les moyens de traitement de données 11a du premier serveur ont une forte puissance de calcul, car l'apprentissage est long et complexe par rapport à la simple utilisation du réseau de neurones appris), et le cas échéant des moyens de stockage de données 12a, 12b telle qu'une mémoire informatique, par exemple un disque dur. On verra plus loin une base de données d'apprentissage qui peut être stockée par la mémoire 12a du premier serveur 10b.

Selon un mode de réalisation préféré combinant les trois types de procédés selon l'invention, le système comprend le premier serveur 10a connecté à l'exosquelette 1 embarquant ledit deuxième équipement 10b via le réseau 20 :

- le premier serveur 10a exploite sa puissance de calcul pour le cas échéant constituer deux bases de données d'apprentissage, puis mettre en oeuvre un procédé d'apprentissage de paramètres d'un deuxième réseau de neurones à partir de ces bases de données d'apprentissage, et il transmet au deuxième serveur 1b les paramètres appris du deuxième réseau de neurones ;
- le deuxième serveur 10b met en oeuvre le procédé de génération d'un trajectoire de l'exosquelette 1 grâce à un réseau de neurones utilisant les paramètres récupérés depuis le premier serveur 10a ;
- l'exosquelette 1 applique directement ladite trajectoire générée in situ pour se mettre en mouvement.

On comprendra qu'il peut y avoir une pluralité d'exosquelettes 1 embarquant chacun leur deuxième serveur 10b (qui peut alors être de puissance et d'encombrement limité, dans la mesure où il ne génère de trajectoires que pour l'exosquelette 1 auquel il est dédié), ou bien une pluralité d'exosquelettes 1 connectés chacun à un deuxième serveur 10b plus puissant et éventuellement confondu avec le premier serveur 10a (et ayant la capacité de générer des trajectoires à la volée pour tous les exosquelettes 1).

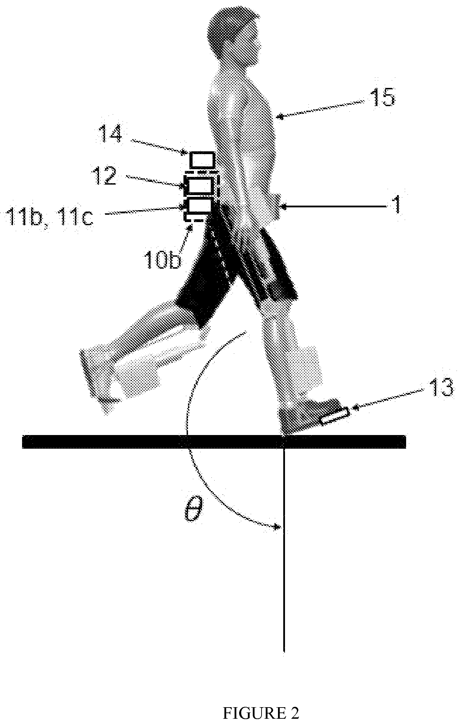

En référence à la **figure 2,** on entend par exosquelette 1 un système mécanique articulé de type dispositif robotisé bipède, actionné et commandé, pourvu de deux jambes, accueillant plus précisément un opérateur humain présentant ses membres inférieurs chacun solidaires d'une jambe de l'exosquelette 1 (notamment grâce à des sangles). Il peut ainsi être un robot plus ou moins humanoïde. Par « marche », on entend ici la mise en mouvement du dispositif robotisé 1 au sens large, qui se traduit en pratique par en appui alternatif sur les jambes, en position debout (sur sol plat, une rampe inclinée, dans un escalier, etc.), de sorte à produire un déplacement, mais également un mouvement pour passer d'une position assise à une position debout (mouvement dit de « lever ») ou inversement.

L'exosquelette 1 présente une pluralité de degrés de liberté, c'est-à-dire d'articulations déformables (généralement via une rotation) c'est-à-dire mobiles les unes par rapport aux autres, qui sont chacun soit « actionné », soit « non-actionné ».

Un degré de liberté actionné désigne une articulation pourvue d'un actionneur commandé par des moyens de traitement de données 11c, c'est-à-dire que ce degré de liberté est contrôlé et que l'on peut agir dessus. Au contraire un degré de liberté non actionné désigne une articulation dépourvue d'actionneur, c'est-à-dire que ce degré de liberté suit sa propre dynamique et que les moyens de traitement de données 11c n'ont pas de contrôle direct dessus (mais a priori un contrôle indirect via les autres degrés de liberté actionnés). Dans l'exemple de la figure 1, le contact talon-sol est ponctuel, et l'exosquelette 1 est ainsi libre en rotation par rapport à ce point de contact. L'angle entre l'axe talon-hanche et la verticale constitue alors un degré de liberté non-actionné.

Le présent exosquelette comprend naturellement au moins un degré de liberté actionné, préférentiellement une pluralité, et également préférentiellement au moins un degré de liberté non actionné, c'est-à-dire qu'il est dit « sous-actionné », comme évoqué précédemment. On appelle degré de sous-actionnement le nombre de degrés de liberté non-actionnés.

Les moyens de traitement de données 11c désignent un équipement informatique (typiquement un processeur, soit externe si l'exosquelette 1 est « télécommandé » mais préférentiellement embarqué dans l'exosquelette 1), le cas échéant confondus avec les moyens de traitement de données 11b du deuxième serveur 10b s'il est embarqué (cas représenté par la figure 2), et adaptés pour traiter des instructions et générer des commandes à destination des différents actionneurs. Ces derniers peuvent être électriques, hydrauliques, etc.

L'exosquelette 1 peut en outre comprendre une mémoire 12 (en particulier celle du deuxième serveur 10b, c'est-à-dire que les moyens 12 peuvent être externes si le serveur 10b n'est pas embarqué), et des capteurs divers tels que des moyens de détection de l'impact des pieds au sol 13, des moyens de mesure inertielle 14, un gilet de capteurs 15 de l'opérateur, etc.

La présente demande ne sera limitée à aucune architecture d'exosquelette 1, et on prendra l'exemple tel que décrit dans les demandes WO2015140352 et WO2015140353.

Ainsi, de façon préférée et conformément à ces demandes, l'exosquelette 1 comprend sur chaque jambe une structure de pied comprenant un plan de support sur lequel un pied d'une jambe de la personne portant l'exosquelette peut venir en appui lorsque le pied est à plat.

Ce plan de support comprend une plate-forme avant et une plate-forme arrière, telles qu'une liaison pivot pied relie la plate-forme avant à la plate-forme arrière, en constituant un degré de liberté non actionné. Une telle architecture est particulière adapté à des trajectoires de type « HZD ».

L'homme du métier saura toutefois adapter le présent procédé à toute autre architecture mécanique.

*Principe de l'invention*

Ces dernières années, on a vu un engouement pour les techniques d'intelligence artificielle dans le domaine du contrôle temps réel.

Malheureusement, le processus de génération de trajectoires actuel est difficilement compatible avec les méthodes d'apprentissage par renforcement puisqu'il n'existe pas de gradient analytique, nécessaire à la rétropropagation des erreurs. Il faut alors appel à des méthodes plus complexes et nécessitant davantage de données expérimentales, coûteuses à obtenir, telles que Q-Learning et Policy Gradients. De plus, ces méthodes ne permettent pas de réaliser l'apprentissage sur un exosquelette 1 réel. Il faut donc faire des simulations.

Ainsi, bien que certains travaux en robotique fassent appel aux réseaux de neurones pour réaliser des tâches de planification, leur usage se limite à la régression non-linéaire, le plus souvent dans l'objectif de compresser une base de données de trajectoires et ainsi l'embarquer aisément dans un dispositif réel. Cette approche relègue le réseau de neurones au statut d'outil « boite noire » dans le cadre de recherches axées sur des problématiques issues du domaine de la robotique traditionnelle plutôt que du Machine Learning, offrant peu de perspective de recherche. D'autres travaux, comme présenté dans l'article de Thomas Gurriet et al. "Towards Variable Assistance for Lower Body Exoskeletons" (IEEE Robotics and Automation Letters 2019), présentent des procédés de génération d'une trajectoire d'exosquelette utilisant un réseau de neurones. Ces travaux affichent des performances mitigées, car les trajectoires sont des données difficilement modélisables, celles-ci présentent de nombreuses irrégularités et un caractère chaotique vis-à-vis des paramètres d'entrée.

Le présent procédé résout astucieusement ces difficultés en apprenant en fait successivement deux réseaux de neurones, désignés premier et deuxième réseau de neurone. Le deuxième réseau de neurones est le réseau « de sortie » permettant effectivement de générer la trajectoire de l'exosquelette.

Comme expliqué, on entend par « trajectoire » de l'exosquelette les évolutions de chaque degré de liberté (en particulier actionné) exprimées en fonction du temps ou d'une variable de phase.

L'idée est de définir une trajectoire « complexe » comme une séquence de trajectoires périodiques dites « élémentaires » entrecoupées de transitions. Par trajectoire périodique, on entend toute trajectoire appliquée (le cas échéant de manière répétée) sur la durée d'un pas de sorte que partant d'un état initial de l'exosquelette 1 au début d'un pas (moment de contact du pied), on retourne au même état au début du pas suivant (comme expliqué cela englobe toute marche à plat, mais également sur rampe, une montée ou descente d'un escalier, etc.). On dit également que la trajectoire périodique forme un « cycle limite ». Ainsi, ladite trajectoire périodique peut être appliquée sur n'importe quel nombre de pas de manière stable.

En d'autres termes, chaque trajectoire élémentaire est associée à une marche donnée de l'exosquelette 1 (une marche étant définie par un n-uplet de paramètres de marche), et permet de maintenir cette marche de manière stable et faisable (i.e. comme on le verra respecte toutes les contraintes d'un problème d'optimisation et minimise autant que possible une fonction de coût). Comme expliqué, lesdits paramètres de marche correspondent à des « caractéristiques » de la façon de marcher, telles que la longueur des pas, la fréquence de marche et l'inclinaison du buste, mais également hauteur des marches en cas de franchissement d'escaliers, l'angle de rotation instantané pour les mouvements courbes ; et également à des caractéristiques morphologiques de l'opérateur (un sous-groupe des paramètres de marche dits paramètres patient) telles que sa taille, son poids, la longueurs des cuisses ou des tibia, la position du centre de masse (valeur du décalage vers l'avant) et le débattement latéral du buste dans le cadre d'activité de rééducation.

Lesdites « contraintes » d'une marche évoquées ci-avant peuvent être variées et dépendre du type de marche souhaitée, par exemple une marche « pied plat », ou « HZD ». Le présent procédé ne sera limité à aucun type de marche souhaité.

Les transitions correspondent à des changements de marche, i.e. des variations de valeurs desdits paramètres de marche (par exemple une augmentation de la longueur de pas) : connaissant un jeu initial de paramètres de marche et un jeu final de paramètres de marche, et donc une trajectoire périodique initiale (associée au jeu initial de paramètres de marche) et une trajectoire périodique finale (associée au jeu final de paramètres de marche), ladite transition est un fragment de trajectoire permettant de passer de la trajectoire périodique initiale à la trajectoire finale. On note qu'il peut y avoir des transitions « initiale » ou « finale », par exemple un mouvement de lever ou d'assise, mais on se focalisera sur les transitions « intermédiaires » entre trajectoires périodiques, dans la mesure où les transitions initiale ou finale peuvent être précalculées.

Comme l'on verra, une telle transition est astucieusement vue comme un chemin dans un espace de trajectoires périodiques, i.e. il peut être prévu entre une trajectoire périodique initiale et une trajectoire périodique finale une ou plusieurs trajectoires intermédiaires, correspondant en particulier à un « mélange » entre ces deux trajectoires, c'est-à-dire ayant des paramètres de marche intermédiaires entre ceux des trajectoires initiale et finale. En pratique, un ensemble continu de trajectoires périodiques élémentaires intermédiaires possibles peut être disponible à l'avance (toute les trajectoires en faisant évoluer en particulier linéairement les paramètres de marche de l'une à l'autre des trajectoires initiale et finale), et la détermination de la trajectoire de transition consiste à choisir la succession adéquate de trajectoires intermédiaires (avantageusement paramétrée par une fonction dite de « progression » comme l'on verra plus loin). Le nombre de ces trajectoires intermédiaires peut être fixé et elles sont avantageusement réparties uniformément, c'est-à-dire que l'ensemble des trajectoires intermédiaires possibles forme une succession continue et linéaire.

En d'autres termes, plutôt que de passer instantanément d'une trajectoire initiale à une trajectoire finale, on procède par petits incréments sur des cycles successifs. Si la transition est suffisamment lente, alors l'impact du changement progressif de trajectoire peut être négligé. En d'autres termes, l'état du système appartient quasiment à un cycle limite à chaque pas.

Le premier réseau de neurones est apte à prédire des marches, c'est-à-dire générer une trajectoire élémentaire périodique de l'exosquelette 1 pour une marche donnée de l'exosquelette 1. En d'autres termes, le premier réseau de neurone prend en entrée un n-uplet de paramètres de marche et génère en sortie la trajectoire périodique correspondante. L'avantage est que cette approche limite le nombre de dimensions, et reste donc à la portée des systèmes actuels.

Le deuxième réseau de neurones est capable à la fois de générer des marches périodiques identiques à celles obtenues à par le premier réseau de neurones, mais également de prédire des transitions physiquement admissibles entre les cycles de marche périodique, i.e. de générer à la fois des trajectoires élémentaires périodiques et des transitions, c'est-à-dire au final toute trajectoire. Il généralise donc le premier réseau de neurones et vient en remplacement.

Chacun du premier et du deuxième réseau est préférentiellement un réseau de type « à propagation avant » (FNN, « Feedforward Neural Network »), c'est-à-dire dans lequel l'information ne se déplace que dans une seule direction, vers l'avant, à partir des noeuds d'entrée, en passant par les couches cachées (le cas échéant) et vers les noeuds de sortie, sans connexions récurrentes, car de tels réseaux présentent une excellente évolutivité. On pourra notamment prendre un FNN avec 2 ou 3 couches cachées et 200 à 300 neurones par couches. Alternativement on pourra utiliser d'autres types de réseaux de neurones tels que des réseaux de neurones à convolution (CNN), des réseaux récurrents de type Long Short-Term Memory (LSTM) ou Gated Récurrent Unit (GRU), etc.

A noter qu'il est souhaitable que le premier et/ou le deuxième réseau de neurones présente un caractère continûment dérivable par rapport aux paramètres de marche, et pour ce cela on préférera par exemple un réseau utilisant une fonction d'activation de type sigmoïde, qui est continûment dérivable (par opposition à ReLU notamment).

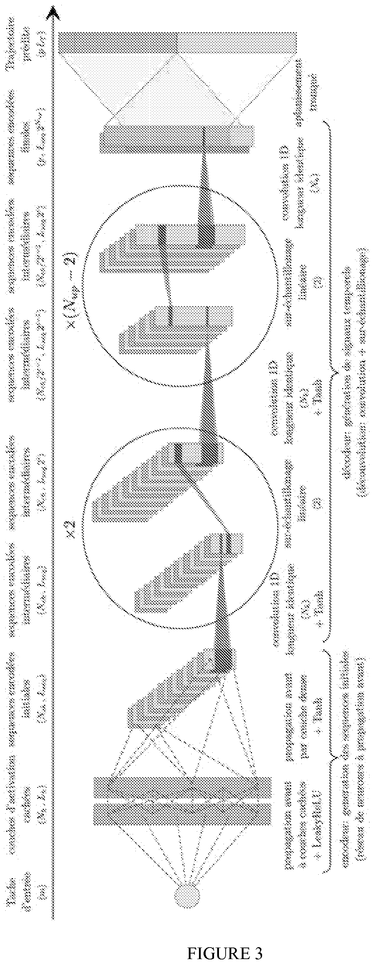

Selon un mode de réalisation particulièrement préféré illustré par la **figure 3,** chacun du premier et du deuxième réseau est avantageusement un FNN présentant un bloc final dit de déconvolution (ou convolution transposée) utilisant en alternance des couches de convolution et des couches de sur-échantillonnage (upsampling). Plus précisément, cette architecture forme une structure dite d'« auto-encodeur » (ou « encodeur-décodeur ») dans laquelle le bloc principal FNN joue le rôle d'encodeur en générant des feature maps (en français « cartes de caractéristiques ») de faible dimension, dites séquences encodées initiales, et le bloc de déconvolution joue le rôle de décodeur en reconstruisant la séquence de sortie définissant la trajectoire prédite à partir des séquences encodées initiales. Cette architecture permet d'avoir peu de paramètres à apprendre car sa structure prédit naturellement des séquences temporelles corrélées entre elles, il n'est donc pas nécessaire d'apprendre ce comportement de zéro comme c'est le cas avec un FNN classique.

*Procédé d'apprentissage*

Selon un premier aspect, est proposé le procédé d'apprentissage, mis en oeuvre par les moyens de traitement de données 11a du premier serveur 1a.

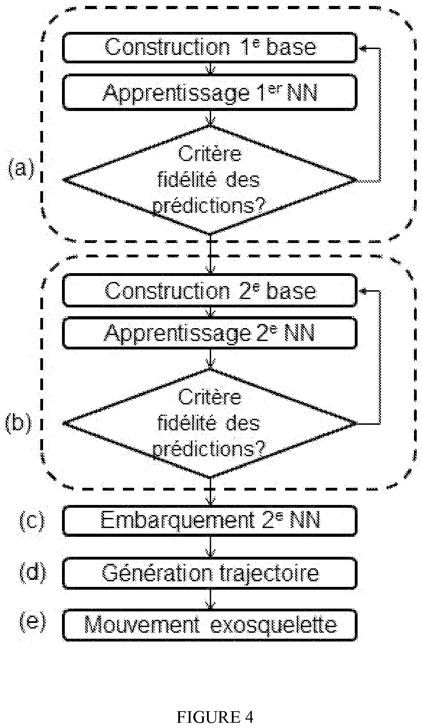

Comme expliqué et comme illustré par la **figure 4,** le procédé commence par une étape (a) d'apprentissage des paramètres du premier réseau de neurones apte à générer une trajectoire élémentaire périodique de l'exosquelette 1 pour une marche donnée de l'exosquelette 1 définie par un n-uplet de paramètres de marche, en fonction d'une première base de données d'apprentissage de trajectoires périodiques pour un ensemble de marches possibles de l'exosquelette 1.

De manière préférée, cette étape (a) comprend la construction de ladite première base de données d'apprentissage, i.e. la génération desdites trajectoires périodiques la constituant.

L'idée est de couvrir l'ensemble des marches possibles de l'exosquelette 1, c'est-à-dire de disposer pour un grand nombre de n-uplets si possible bien repartis de paramètres de marche d'une trajectoire associée.

On connait pour cela comme expliqué des outils d'optimisation, capables notamment de générer la première base de données de trajectoires par optimisation sur un espace compact de l'ensemble de recherche admissible constitué des différents paramètres de marche. Par exemple, dans le cas de trajectoires HZD, le problème de la génération de trajectoires est formulé sous la forme d'un problème de contrôle optimal qui peut être résolu de manière préférée par un algorithme dit de collocation directe, voir le document Omar Harib et al., Feedback Control of an Exoskeleton for Paraplégies Toward Robustly Stable Hands-free Dynamic Walking.

Les échantillons sont avantageusement générés aléatoirement suivant une loi uniforme et discrétisées sur un ensemble fini ayant un nombre identique de valeurs possibles par paramètre afin de garantir de couvrir uniformément l'espace complet même pour un faible nombre d'échantillons et inclure exactement sa frontière. Mathématiquement, cela signifie que pour tout n-uplet donné de paramètres il existe un échantillon « proche ».

A noter que cette étape de constitution de la première base d'apprentissage est longue mais peut être faite très en amont, et la première base peut être complétée petit à petit. On peut également partir d'une base pré-construite.

En ce qui concerne l'apprentissage du premier réseau en lui-même, on pourra procéder de manière classique notamment par apprentissage supervisé, et à la fin vérifier un critère représentatif de la fidélité des prédictions du réseau de neurones pour valider ou non l'apprentissage.

Plus rigoureusement, l'erreur de prédiction doit être avantageusement significativement inférieure à une erreur maximum de suivi de référence sur l'exosquelette réel au cours d'un pas en moyenne, c'est-à-dire que moins d'une faction donnée (en particulier 4%) des prédictions ont une erreur maximum (en norme infinie, c'est-à-dire toute articulation et tout instant confondu) de prédiction supérieure à un seuil tel que 0.01 rad.

Si ce n'est pas le cas, on pourra modifier l'algorithme de génération de trajectoires lui-même, de façon à l'inciter à produire des trajectoires similaires à une référence, correspondant dans le cas présent aux prédictions du réseau de neurones.

Une nouvelle première base de données est alors préférentiellement générée en suivant cette méthodologie et le premier réseau de neurones est réentraîné sur cette nouvelle base dans une nouvelle occurrence de l'étape (a), sans le réinitialiser, mais plutôt incrémentalement par rapport à son état précédent (i.e. on part des poids obtenus à l'issue de la première occurrence de l'étape (a)). Si le critère de fidélité des prédictions n'est toujours pas satisfait, le processus est réitéré.

À l'issue de l'étape (a), un premier réseau de neurones capable de prédire des trajectoires périodiques est à disposition. Ces trajectoires périodiques sont garanties d'être faisables et stables, c'est-à-dire respectant toutes les contraintes du problème d'optimisation issues à l'algorithme d'optimisation de trajectoire et minimisant autant que possible la fonction de coût du problème d'origine. Il n'est comme expliqué pas possible d'étendre l'approche proposée à la génération de transitions car le nombre de dimensions à explorer devient trop important.

On comprendra qu'il existe un grand nombre (voire une infinité) trajectoires faisables pour une tâche données (c'est à dire qui respectent les contraintes). Le rôle du processus d'optimisation est de calculer celle qui minimise un cout choisi parmi ces dernières (l'énergie en pratique). Cependant, l'ensemble de ces solutions est difficilement modélisable par un réseau de neurones, c'est pourquoi, on cherche à restreindre le problème d'optimisation aux seules trajectoires parfaitement modélisables. Concrètement, c'est un problème de consensus entre toutes les trajectoires de la base de données : celles-ci doivent s'accorder entre elles afin d'être modélisable en tant qu'ensemble, et ainsi garantir des prédictions précises et fiables (c'est à dire faisable/stable sur l'exosquelette 1 pour les échantillons de d'entraînement mais aussi de test). C'est ici qu'intervient la méthode itérative, car résoudre ce problème directement est impossible car trop complexe.

Ainsi, comme expliqué le procédé comprend ensuite une étape (b) d'apprentissage, à partir des paramètres du premier réseau de neurones, des paramètres d'un deuxième réseau de neurones apte à générer des trajectoires élémentaires périodiques de l'exosquelette 1 et des transitions d'une trajectoire élémentaire périodique de l'exosquelette 1 à une autre trajectoire élémentaire périodique de l'exosquelette 1, en fonction d'une deuxième base de données d'apprentissage de trajectoires périodiques élémentaires et de transitions pour un ensemble de marches possibles de l'exosquelette 1.

De manière préférée, le deuxième réseau de neurones et le premier réseau de neurones ont comme expliqué la même architecture (par exemple celle de la figure 3), mais le deuxième réseau de neurones comprend un plus grand nombre de paramètres (soit par exemple en ayant plus de paramètres par couche pour un FNN, ou plus de canaux pour un réseau convolutif par exemple), les paramètres supplémentaires pouvant être appris lors de l'étape (b). Les paramètres communs pourront éventuellement être eux aussi réappris dans l'étape (b) en partant des valeurs obtenues à l'étape (a). Alternativement, le deuxième réseau de neurones peut correspondre au premier réseau de neurones avec des couches supplémentaires par rapport au premier réseau, dont les paramètres seront appris lors de l'étape (b).

On comprendra que de la même façon que pour l'étape (a), l'étape (b) pourra comprendre la construction de ladite deuxième base de données d'apprentissage, i.e. la génération desdites trajectoires périodiques et transitions la constituant, et ce avantageusement à partir de la première base de données. Plus précisément, on va construire toutes les transitions d'une trajectoire périodique dite initiale de la première base de données d'apprentissage à une autre trajectoire périodique dite finale de la première base de données d'apprentissage. A nouveau la deuxième base d'apprentissage peut être constituée très en amont, complétée petit à petit, et/ou être pré-construite.

Comme expliqué, une transition peut être vue comme un chemin dans un espace de trajectoires périodiques d'une trajectoire initiale à une trajectoire finale, de sorte que ladite deuxième base peut contenir, pour chaque paire de trajectoires périodiques élémentaires initiale et finale de la première base (i.e. chaque couple de n-uplets de paramètres de marche, l'un désignant la trajectoire initiale et l'autre trajectoire finale) la transition de l'une à l'autre. Avantageusement, toutes les transitions possibles sont considérées comme équiprobables, quelle que soit l'amplitude de la transition.

En pratique, une méthode heuristique se basant sur les seules prédictions de marche périodiques peut être proposée. L'approche est la suivante :

1. Générer une grille de trajectoires périodiques (qui sont autant de trajectoires intermédiaires possibles) allant de la trajectoire périodique initiale à la trajectoire finale en faisant varier linéairement les paramètres de marche. Ces trajectoires intermédiaires correspondent à un mélange linéaire entre les deux trajectoires initiale et finale. Comme expliqué le nombre de trajectoires intermédiaires peut être fixé et elles sont avantageusement réparties uniformément.

2. Une transition correspond à n'importe quel chemin parcourant cette grille du coin supérieur gauche (c'est-à-dire trajectoire périodique initiale au temps initial) au coin inférieur droit (trajectoire périodique finale au temps final). La transition considérée comme optimale parmi un choix infini de possibilités peut alors être calculée à l'aide d'un algorithme dit « de plus court chemin » sous contraintes. En considérant la grille comme un graphe non orienté, i.e. les sommets du graphes sont des trajectoires périodiques élémentaires (initiale, finale ou intermédiaire), le coût associé à chaque transition d'un sommet à l'autre (parcours d'une arête, i.e. changement de trajectoire) correspond à l'« inconsistance » de la dynamique due à la transition d'une marche périodique à une autre, l'objectif étant de minimiser l'« inconsistance » de la transition sur l'ensemble de la trajectoire. Plus précisément, il est souhaitable d'éviter sur la durée de la transition un changement de trajectoire qui aurait un impact trop fort risquant de créer un déséquilibre. L'inconsistance correspond mathématiquement à la violation de l'équation de la dynamique le long de la trajectoire de transition : on pourra utiliser par exemple l'erreur résiduelle entre la dérivée numérique calculée de la trajectoire de transition et le terme attendu d'après l'équation de la dynamique. En pratique, comme expliqué, le parcours dans la grille peut être paramétrée par une fonction dite de « progression », qui définit la transition progressive entre la trajectoires périodiques initiale et finale, laquelle peut par exemple être paramétrée par un polynôme dont les coefficients sont optimisés pour minimiser l'inconsistance et respecter les conditions de bord grâce audit algorithme de plus court chemin.

En ce qui concerne l'apprentissage du deuxième réseau en lui-même, on pourra procéder de manière classique en minimisant une fonction de coût, et à nouveau à la fin vérifier ledit critère représentatif de la fidélité des prédictions du réseau de neurones pour valider ou non l'apprentissage.

À l'issue de l'étape (b), un premier réseau de neurones capable de prédire des trajectoires complexes (incluant des transitions) est à disposition. Le deuxième réseau de neurones (plus particulière ses paramètres appris) peut alors être embarqué dans une étape (c) sur le deuxième serveur 10b (préférentiellement sur l'exosquelette 1).

*Procédé de génération de trajectoire*

Selon un deuxième aspect, est proposé le procédé de génération de trajectoire d'une trajectoire d'un exosquelette 1, mis en oeuvre par les moyens de traitement de données 11b du deuxième serveur 1b. Ledit procédé de génération de trajectoire d'une trajectoire d'un exosquelette 1 suit la mise en oeuvre du procédé d'apprentissage selon le premier aspect du deuxième réseau de neurones. Plus précisément, il commence par ladite étape (c) de stockage sur une mémoire 12 du deuxième serveur 10b des paramètres d'un deuxième réseau de neurones appris au moyen du procédé d'apprentissage de paramètres d'un réseau de neurones pour génération de trajectoires de l'exosquelette 1.

Comme expliqué, le deuxième réseau de neurones peut avoir être généré bien avant, être embarqué sur un grand nombre d'exosquelettes 1, etc. De manière préféré il est mis en oeuvre en temps réel.

Ledit deuxième procédé peut être mis en oeuvre régulièrement sur la durée de fonctionnement de l'exosquelette 1, et comprend en particulier l'appel éventuellement répété du deuxième réseau de neurones de sorte à obtenir des trajectoires périodiques et/ou des transitions, dans une étape (d) de génération d'une trajectoire de l'exosquelette 1 par des moyens de traitement de données 11b du deuxième serveur 10b en utilisant ledit deuxième réseau de neurones

Plus précisément, on suppose une séquence de n-uplets de paramètres de marche progressivement obtenus (par exemple du fait de nouvelles commandes de la part de l'opérateur de l'exosquelette). Pour chaque nouveau n-uplet de paramètres, le deuxième réseau de neurones détermine une nouvelle trajectoire périodique et une transition vers cette nouvelle trajectoire périodique.

Pour cela, le procédé de génération d'une trajectoire comprend avantageusement la détermination (le cas échéant répétée de manière régulière) du n-uplet de paramètres de marche de l'exosquelette 1.

En effet, si l'exosquelette 1 est un exosquelette recevant un opérateur humain, c'est la posture dudit opérateur humain (et éventuellement des appuis boutons) qui détermine lesdits paramètres (contrairement au cas d'un robot normal qui peut directement recevoir une requête de démarrage comprenant une consigne de vitesse et/ou de direction de marche).

Pour cela, l'opérateur peut être muni comme expliqué d'un gilet de capteurs 15 permettant de détecter la configuration de son buste (orientation de celui-ci). La direction dans laquelle l'opérateur oriente son buste est celle dans laquelle il souhaite marcher et la vitesse est donnée par l'intensité avec laquelle il met son buste en avant (à quel point il se penche). La requête de démarrage peut correspondre à l'appui par l'opérateur sur un bouton (ou une posture particulière) signifiant son intention de se mettre en marche et donc ordonnant aux moyens de traitement de données de déterminer lesdits paramètres. Certains paramètres tels que l'angle de rotation instantané ou la hauteur des marches en cas de franchissement d'escaliers peuvent être prédéterminés ou obtenus au moyen d'autres capteurs 13, 14.

Selon un troisième aspect, est proposé un procédé de mise en mouvement d'un exosquelette 1 comprenant la mise en oeuvre dudit procédé selon le deuxième aspect de génération d'une trajectoire de l'exosquelette (étape (a), (b), (c), (d)), puis (dans une étape qu'on note (e)) l'exécution de ladite trajectoire de sorte à ce que l'exosquelette 1 marche.

Les étapes (d) et (e) peuvent être répétées de sorte à corriger la trajectoire de l'exosquelette 1 toujours en temps réel.

*Equipements et système*

Selon un quatrième aspect, l'invention concerne le système, pour la mise en oeuvre des procédés selon le premier le deuxième et/ou le troisième aspect.

Comme expliqué, ce système comprend un premier serveur 10a, un deuxième serveur 10b et un exosquelette 1, possiblement confondus.

Le premier serveur 10a comprend des moyens de traitement de données 11a pour la mise en oeuvre du procédé selon le premier aspect.

Le deuxième serveur 10b comprend des moyens de traitement de données 11b pour la mise en oeuvre du procédé selon le deuxième aspect, et généralement des moyens de stockage de données 12 pour le stockage le deuxième réseau de neurones (ou plutôt ses paramètres appris).

L'exosquelette 1 comprend des moyens de traitement de données 11c configurés pour la mise en oeuvre du procédé selon le troisième aspect, ainsi que si nécessaire des moyens de stockage de données 12 (en particulier ceux du deuxième serveur 10b), des moyens de mesure inertielle 14 (centrale à inertie), des moyens pour détecter l'impact des pieds au sol 13 (capteurs de contact ou éventuellement capteurs de pression), et/ou un gilet de capteurs 15.

Il présente une pluralité de degrés de liberté dont au moins un degré de liberté actionné par un actionneur commandé par les moyens de traitement de données 11c dans le cadre de la mise en oeuvre du procédé selon le troisième aspect.

*Produit programme d'ordinateur*

Selon un cinquième et un sixième aspects, l'invention concerne un produit programme d'ordinateur comprenant des instructions de code qui, lorsque le programme est exécuté sur un premier serveur, conduisent celui-ci à exécuter les étapes du procédé selon le premier aspect d'apprentissage des paramètres d'un réseau de neurones, lorsque le programme est exécuté sur un deuxième serveur, conduisent celui-ci à exécuter les étapes du procédé selon le deuxième aspect de génération d'une trajectoire d'un exosquelette 1 et/ou lorsque le programme est exécuté par des moyens de traitement de données de l'exosquelette, conduisent celui-ci à exécuter les étapes du procédé selon le troisième aspect de mise en mouvement d'un exosquelette 1, ainsi que des moyens de stockage lisibles par un équipement informatique sur lequel on trouve ce produit programme d'ordinateur.

**Revendications**

1. Procédé d'apprentissage de paramètres d'un réseau de neurones pour génération de trajectoires d'un exosquelette (1), le procédé comprenant la mise en oeuvre par des moyens de traitement de données (11a) d'un premier serveur (10a), d'étapes de :

   (a) Apprentissage des paramètres d'un premier réseau de neurones apte à générer des trajectoires élémentaires périodiques de l'exosquelette (1) chacune pour une marche donnée de l'exosquelette (1) définie par un n-uplet de paramètres de marche, en fonction d'une première base de données d'apprentissage de trajectoires périodiques pour un ensemble de marches possibles de l'exosquelette (1) ;
   (b) Apprentissage, à partir des paramètres du premier réseau de neurones, des paramètres d'un deuxième réseau de neurones apte à générer des trajectoires élémentaires périodiques de l'exosquelette (1) et des transitions d'une trajectoire élémentaire périodique de l'exosquelette (1) à une autre trajectoire élémentaire périodique de l'exosquelette (1), en fonction d'une deuxième base de données d'apprentissage de trajectoires périodiques élémentaires et de transitions pour un ensemble de marches possibles de l'exosquelette (1).

**2.** Procédé selon la revendication 1, dans lequel l'étape (a) comprend la construction de ladite première base de données d'apprentissage de trajectoires périodiques pour un ensemble de marches possibles de l'exosquelette (1) en utilisant un algorithme d'optimisation.

**3.** Procédé selon la revendication 2, dans lequel ledit ensemble de marches possibles de l'exosquelette (1) est choisi de sorte à couvrir uniformément l'espace dans lequel est à valeur ledit n-uplet de paramètres de marche.

**4.** Procédé selon l'une des revendications 2 et 3, dans lequel l'étape (a) comprend en outre la vérification d'un critère représentatif de la fidélité des prédictions du premier réseau de neurones, et si ce critère n'est pas vérifié l'étape (a) est répétée.

**5.** Procédé selon l'une des revendications 1 à 4, dans lequel l'étape (b) comprend la construction de ladite deuxième base de données d'apprentissage de trajectoires périodiques et de transitions pour un ensemble de marches possibles de l'exosquelette (1) à partir de la première base de données d'apprentissage.

**6.** Procédé selon la revendication 5, dans lequel ladite deuxième base de données comprend toutes les transitions d'une trajectoire élémentaire périodiques de l'exosquelette (1) de la première base de données d'apprentissage à une autre trajectoire élémentaire périodiques de l'exosquelette (1) de la première base de données d'apprentissage.

**7.** Procédé selon la revendication 6, dans lequel chaque transition d'une trajectoire élémentaire périodique de l'exosquelette (1), dite trajectoire périodique élémentaire initiale, à une autre trajectoire élémentaire périodique de l'exosquelette (1), dite trajectoire périodique élémentaire finale, est définie comme une séquence de trajectoires élémentaires périodiques comprenant successivement la trajectoire périodique élémentaire initiale, au moins une trajectoire périodique élémentaire intermédiaire, et la trajectoire périodique élémentaire finale, la construction de la deuxième base de données comprenant, pour chaque couple d'une trajectoire périodique élémentaire initiale et d'une trajectoire périodique finale de la première base de données d'apprentissage, la détermination de l'au moins une trajectoire périodique élémentaire intermédiaire.

**8.** Procédé selon la revendication 7, dans lequel chaque trajectoire périodique élémentaire intermédiaire entre une trajectoire périodique élémentaire initiale et une trajectoire périodique finale est un mélange linéaire desdites trajectoires périodiques élémentaires initiale et finale.

**9.** Procédé selon l'une des revendications 7 et 8, dans lequel la détermination de l'au moins une trajectoire périodique élémentaire intermédiaire pour un couple d'une trajectoire périodique élémentaire initiale et d'une trajectoire périodique finale utilise un algorithme dit de plus court chemin de la trajectoire périodique élémentaire initiale à la trajectoire périodique finale dans un graphe de trajectoires périodiques élémentaires tel que le coût pour passer d'une trajectoire périodique élémentaire à une autre est représentatif d'une inconsistance de la dynamique de l'exosquelette.

**10.** Procédé selon l'une des revendications 5 à 9, dans lequel l'étape (b) comprend en outre la vérification d'un critère représentatif de la fidélité des prédictions du deuxième réseau de neurones, et si ce critère n'est pas vérifié l'étape (b) est répétée.

**11.** Procédé de génération d'une trajectoire d'un exosquelette (1) comprenant des étapes de :

(c) stockage sur une mémoire (12) d'un deuxième serveur (10b) des paramètres d'un deuxième réseau de neurones appris au moyen d'un procédé d'apprentissage de paramètres d'un réseau de neurones pour génération de trajectoires de l'exosquelette (1) selon l'une des revendications 1 à 10 ;
(d) génération d'une trajectoire de l'exosquelette (1) par des moyens de traitement de données (11b) du deuxième serveur (10b) en utilisant ledit deuxième réseau de neurones.

**12.** Procédé selon la revendication 11, ledit exosquelette (1) recevant un opérateur humain, l'étape (d) comprenant la détermination d'une séquence de n-uplets de paramètres de marche de l'exosquelette (1) souhaitée par ledit opérateur, et la trajectoire de l'exosquelette (1) est générée en fonction de ladite séquence de n-uplets.

**13.** Procédé selon la revendication 12, dans lequel la trajectoire générée de l'exosquelette (1) comprend pour chaque n-uplet de ladite séquence une nouvelle trajectoire périodique élémentaire et une transition vers cette nouvelle trajectoire périodique élémentaire.

**14.** Procédé de mise en mouvement d'un exosquelette (1) présentant une pluralité de degrés de liberté dont au moins un degré de liberté actionné par un actionneur commandé par des moyens de traitement de données (11c) comprenant une étape (e) d'exécution par les moyens de traitement de données (11c) de l'exosquelette (1) d'une trajectoire de l'exosquelette (1) générée au moyen du procédé de génération d'une trajectoire de l'exosquelette (1) selon l'une des revendications 11 à 13, de sorte à faire marcher ledit exosquelette (1).

15. Système comprenant un premier serveur (10a), un deuxième serveur (10b) et un exosquelette (1) comprenant chacun des moyens de traitement de données (11a, 11b, 11c), **caractérisé en ce que** lesdits moyens de traitement de données (11a, 11b, 11c) sont configurés pour mettre en oeuvre un procédé selon l'une des revendication 1 à 10 d'apprentissage de paramètres d'un réseau de neurones pour génération de trajectoires de l'exosquelette (1), un procédé selon l'une des revendications 11 à 13 de génération d'une trajectoire de l'exosquelette (1), et/ou un procédé selon la revendication 14 de mise en mouvement d'un exosquelette (1).

16. Produit programme d'ordinateur comprenant des instructions de code qui,

- lorsque le programme est exécuté sur un premier serveur, conduisent celui-ci à exécuter les étapes du procédé selon l'une des revendication 1 à 10 d'apprentissage de paramètres d'un réseau de neurones pour génération de trajectoires d'un exosquelette (1),
- lorsque le programme est exécuté sur un deuxième serveur, conduisent celui-ci à exécuter les étapes du procédé selon l'une des revendications 11 à 13 de génération d'une trajectoire d'un exosquelette (1), et/ou
- lorsque le programme est exécuté par des moyens de traitement de données de l'exosquelette, conduisent celui-ci à exécuter les étapes du procédé 930 selon la revendication 14 de mise en mouvement d'un exosquelette (1).

17. Moyen de stockage lisible par un équipement informatique sur lequel un produit programme d'ordinateur comprend des instructions de code qui

- lorsque le programme est exécuté sur un premier serveur, conduisent celui-ci à exécuter les étapes du procédé selon l'une des revendication 1 à 10 d'apprentissage de paramètres d'un réseau de neurones pour génération de trajectoires d'un exosquelette (1),
- lorsque le programme est exécuté sur un deuxième serveur, conduisent celui-ci à exécuter les étapes du procédé selon l'une des revendications 11 à 13 de génération d'une trajectoire d'un exosquelette (1), et/ou
- lorsque le programme est exécuté par des moyens de traitement de données de l'exosquelette, conduisent celui-ci à exécuter les étapes du procédé selon la revendication 14 de mise en mouvement d'un exosquelette (1).

**Patentansprüche**

1. Verfahren zum Lernen von Parametern eines neuronalen Netzwerks zum Erzeugen von Trajektorien eines Exoskeletts (1), wobei das Verfahren das Implementieren der folgenden Schritte durch eine Datenverarbeitungseinrichtung (11a) eines ersten Servers (10a) umfasst:

(a) Lernen von Parametern eines ersten neuronalen Netzwerks, das dazu ausgelegt ist, periodische elementare Trajektorien des Exoskeletts (1) jeweils für einen gegebenen Gang des Exoskeletts (1), der durch ein Tupel von Gangparametern definiert ist, in Abhängigkeit von einer ersten Lerndatenbank von periodischen Trajektorien für einen Satz von möglichen Gängen des Exoskeletts (1) zu erzeugen;
(b) Lernen, anhand von Parametern des ersten neuronalen Netzwerks, von Parametern eines zweiten neuronalen Netzwerks, das dazu ausgelegt ist, periodische elementare Trajektorien des Exoskeletts (1) und Übergänge von einer periodischen elementaren Trajektorie des Exoskeletts (1) zu einer anderen periodischen elementaren Trajektorie des Exoskeletts (1) in Abhängigkeit von einer zweiten Lerndatenbank von periodischen elementaren Trajektorien und Übergängen für einen Satz von möglichen Gängen des Exoskeletts (1) zu erzeugen.

2. Verfahren nach Anspruch 1, wobei Schritt (a) das Einrichten der ersten Lerndatenbank von periodischen Trajektorien für einen Satz von möglichen Gängen des Exoskeletts (1) unter Verwendung eines Optimierungsalgorithmus umfasst.

3. Verfahren nach Anspruch 2, wobei der Satz von möglichen Gängen des Exoskeletts (1) so gewählt wird, dass er den Raum, in dem das Tupel von Gangparametern einen Wert hat, gleichmäßig abdeckt.

4. Verfahren nach einem der Ansprüche 2 und 3, wobei Schritt (a) ferner das Überprüfen eines Kriteriums umfasst, das repräsentativ für die Genauigkeit der Vorhersagen des ersten neuronalen Netzwerks ist, und wenn dieses Kriterium nicht überprüft wird, wird Schritt (a) wiederholt.

5. Verfahren nach einem der Ansprüche 1 bis 4, wobei Schritt (b) das Einrichten der zweiten Lerndatenbank von periodischen Trajektorien und Übergänge für einen Satz von möglichen Gängen des Exoskeletts (1) anhand der ersten Lerndatenbank umfasst.

**6.** Verfahren nach Anspruch 5, wobei die zweite Lerndatenbank alle Übergänge von einer periodischen elementaren Trajektorie des Exoskeletts (1) der ersten Lerndatenbank zu einer anderen periodischen elementaren Trajektorie des Exoskeletts (1) der ersten Lerndatenbank umfasst.

**7.** Verfahren nach Anspruch 6, wobei jeder Übergang einer periodischen elementaren Trajektorie des Exoskeletts (1), die anfängliche periodische elementare Trajektorie genannt, zu einer anderen periodischen elementaren Trajektorie des Exoskeletts (1), die finale periodische elementare Trajektorie genannt, als eine Folge periodischer elementarer Trajektorien definiert ist, die nacheinander die anfängliche periodische elementare Trajektorie, mindestens eine dazwischenliegende periodische elementare Trajektorie und die finale periodische elementare Trajektorie umfasst, wobei das Einrichten der zweiten Lerndatenbank für jedes Paar aus einer anfänglichen periodischen elementaren Trajektorie und einer finalen periodischen elementaren Trajektorie der ersten Lerndatenbank das Bestimmen der mindestens einen dazwischenliegenden periodischen elementaren Trajektorie umfasst.

**8.** Verfahren nach Anspruch 7, wobei jede dazwischenliegende periodische elementare Trajektorie zwischen einer anfänglichen periodischen elementaren Trajektorie und einer finalen periodischen Trajektorie eine lineare Mischung aus der anfänglichen und der finalen periodischen elementaren Trajektorie ist.

**9.** Verfahren nach einem der Ansprüche 7 und 8, wobei das Bestimmen der mindestens einen dazwischenliegenden periodischen elementaren Trajektorie für ein Paar aus einer anfänglichen periodischen elementaren Trajektorie und einer finalen periodischen Trajektorie einen Algorithmus für den kürzesten Weg von der anfänglichen periodischen elementaren Trajektorie zur finalen periodischen Trajektorie in einem Diagramm periodischer elementarer Trajektorien verwendet, so dass der Aufwand für den Übergang von einer periodischen elementaren Trajektorie zu einer anderen repräsentativ für eine Inkonsistenz der Dynamik des Exoskeletts ist.

**10.** Verfahren nach einem der Ansprüche 5 bis 9, wobei Schritt (b) ferner das Überprüfen eines Kriteriums umfasst, das repräsentativ für die Genauigkeit der Vorhersagen des zweiten neuronalen Netzwerks ist, und wenn dieses Kriterium nicht überprüft wird, wird Schritt (b) wiederholt.

**11.** Verfahren zum Erzeugen einer Trajektorie eines Exoskeletts (1), das die folgenden Schritte umfasst:

(c) Speichern von Parametern eines zweiten neuronalen Netzwerks, die mittels eines Verfahrens zum Lernen von Parametern eines neuronalen Netzwerks zum Erzeugen von Trajektorien des Exoskeletts (1) nach einem der Ansprüche 1 bis 10 gelernt wurden, in einem Speicher (12) eines zweiten Servers (10b);
(d) Erzeugen einer Trajektorie des Exoskeletts (1) durch eine Datenverarbeitungseinrichtung (11b) des zweiten Servers (10b) unter Verwendung des zweiten neuronalen Netzwerks.

**12.** Verfahren nach Anspruch 11, wobei das Exoskelett (1) einen menschlichen Bediener aufnimmt, wobei der Schritt (d) das Bestimmen einer vom Bediener gewünschten Folge von Tupel von Gangparametern des Exoskeletts (1) umfasst und die Trajektorie des Exoskeletts (1) in Abhängigkeit von der Folge der Tupel erzeugt wird.

**13.** Verfahren nach Anspruch 12, wobei die erzeugte Trajektorie des Exoskeletts (1) für jedes Tupel der Folge eine neue periodische elementare Trajektorie und einen Übergang zu dieser neuen periodischen elementaren Trajektorie umfasst.

**14.** Verfahren zum Inbewegungsetzen eines Exoskeletts (1), das eine Vielzahl von Freiheitsgraden aufweist, von denen mindestens ein Freiheitsgrad durch eine Betätigungsvorrichtung betätigt wird, die von einer Datenverarbeitungseinrichtung (11c) gesteuert wird, umfassend einen Schritt (e) des Ausführens einer Trajektorie des Exoskeletts (1), die mittels des Verfahrens zum Erzeugen einer Trajektorie des Exoskeletts (1) nach einem der Ansprüche 11 bis 13 erzeugt wird, durch die Datenverarbeitungseinrichtung (11c) des Exoskeletts (1), um das Exoskelett (1) zum Laufen zu bringen.

**15.** System, das einen ersten Server (10a), einen zweiten Server (10b) und ein Exoskelett (1) umfasst, die jeweils Datenverarbeitungseinrichtungen (11a, 11b, 11c) umfassen, **dadurch gekennzeichnet, dass** die Datenverarbeitungseinrichtungen (11a, 11b, 11c) dazu konfiguriert sind, ein Verfahren nach einem der Ansprüche 1 bis 10 zum Lernen von Parametern eines neuronalen Netzwerks zum Erzeugen von Trajektorien des Exoskeletts (1), ein Verfahren nach einem der Ansprüche 11 bis 13 zum Erzeugen einer Trajektorie des Exoskeletts (1) und/oder ein Verfahren nach Anspruch 14 zum Inbewegungsetzen eines Exoskeletts (1) durchzuführen.

**16.** Computerprogrammprodukt, das Codeanweisungen umfasst, die,

- wenn das Programm auf einem ersten Server ausgeführt wird, diesen dazu veranlassen, die Schritte des Verfahrens nach einem der Ansprüche 1 bis 10 zum Lernen von Parametern eines neuronalen Netzwerks zum Erzeugen von Trajektorien eines Exoskeletts (1) auszuführen,
- wenn das Programm auf einem zweiten Server ausgeführt wird, diesen dazu veranlassen, die Schritte des Verfahrens nach einem der Ansprüche 11 bis 13 zum Erzeugen einer Trajektorie eines Exoskeletts (1) auszuführen, und/oder
- wenn das Programm durch Datenverarbeitungseinrichtung des Exoskeletts ausgeführt wird, diese dazu veranlassen, die Schritte des Verfahrens nach Anspruch 14 zum Inbewegungsetzen eines Exoskeletts (1) auszuführen.

17. Speichermedium, das von einem Computergerät lesbar ist, auf dem ein Computerprogrammprodukt Codeanweisungen umfasst, die

- wenn das Programm auf einem ersten Server ausgeführt wird, diesen dazu veranlassen, die Schritte des Verfahrens nach einem der Ansprüche 1 bis 10 zum Lernen von Parametern eines neuronalen Netzwerks zum Erzeugen von Trajektorien eines Exoskeletts (1) auszuführen,
- wenn das Programm auf einem zweiten Server ausgeführt wird, diesen dazu veranlassen, die Schritte des Verfahrens nach einem der Ansprüche 11 bis 13 zum Erzeugen einer Trajektorie eines Exoskeletts (1) auszuführen, und/oder
- wenn das Programm durch Datenverarbeitungseinrichtung des Exoskeletts ausgeführt wird, diese dazu veranlassen, die Schritte des Verfahrens nach Anspruch 14 zum Inbewegungsetzen eines Exoskeletts (1) auszuführen.

**Claims**

1. Method for learning parameters of a neural network for generating trajectories of an exoskeleton (1), the method comprising the implementation, by data processing means (11a) of a first server (10a), of steps of:

(a) Learning parameters of a first neural network suitable for generating periodic elementary trajectories of the exoskeleton (1) each for a given walking of the exoskeleton (1) defined by a n-tuple of walking parameters, according to a first database for learning periodic trajectories for a set of possible walkings of the exoskeleton (1);
(b) Learning, using parameters from the first neural network, parameters of a second neural network suitable for generating periodic elementary trajectories of the exoskeleton (1) and transitions from one periodic elementary trajectory of the exoskeleton (1) to another periodic elementary trajectory of the exoskeleton (1), according to a second learning database of periodic elementary trajectories and transitions for a set of possible walkings of the exoskeleton (1).

2. Method according to claim 1, wherein the step (a) comprises the construction of said first learning database of periodic trajectories for a set of possible walkings of the exoskeleton (1) by using an optimisation algorithm.

3. Method according to claim 2, wherein said set of possible walkings of the exoskeleton (1) is chosen in such a way as to uniformly cover the space wherein said n-tuple of walking parameters has value.

4. Method according to one of claims 2 and 3, wherein the step (a) further comprises the verification of a criterion representative of the accuracy of the predictions of the first neural network, and if this criterion is not verified the step (a) is repeated.

5. Method according to one of claims 1 to 4, wherein the step (b) comprises the construction of said second database for learning periodic trajectories and transitions for a set of possible walkings of the exoskeleton (1) using the first learning database.

6. Method according to claim 5, wherein said second database comprises all the transitions from a periodic elementary trajectory of the exoskeleton (1) of the first learning database to another periodic elementary trajectory of the exoskeleton (1) of the first learning database.

7. Method according to claim 6, wherein each transition from a periodic elementary trajectory of the exoskeleton (1), referred to as initial periodic elementary trajectory, to another periodic elementary trajectory of the exoskeleton (1), referred to as final periodic elementary trajectory, is defined as a sequence of periodic elementary trajectories successively comprising the initial periodic elementary trajectory, at least one intermediate periodic elementary trajectory, and the final periodic elementary trajectory, the construction of the second database comprising, for each pair of an initial and of a final periodic trajectory of the first learning database, the determining of the at least one intermediate periodic elementary trajectory.

8. Method according to claim 7, wherein each intermediate periodic elementary trajectory between an initial periodic elementary trajectory and a final periodic trajectory is a linear mixture of said initial and final periodic elementary trajectories.

9. Method according to one of claims 7 and 8, wherein the determining of the at least one intermediate periodic elementary trajectory for a pair of an initial periodic elementary trajectory and of a final periodic trajectory uses a so-called shortest path algorithm from the initial periodic elementary trajectory to the final periodic trajectory in a graph of periodic elementary trajectories such that the cost for passing from one periodic elementary trajectory to another is representative of an inconsistency in the dynamics of the exoskeleton.

10. Method according to one of claims 5 to 9, wherein the step (b) further comprises the verification of a criterion representative of the accuracy of the predictions of the second neural network, and if this criterion is not verified the step (b) is repeated.

11. Method for generating a trajectory of an exoskeleton (1) comprising steps of:

(c) storing in a memory (12) of a second server (10b) parameters of a second neural network learnt using a method for learning parameters of a neural network for generating trajectories of the exoskeleton (1) according to one of claims 1 to 10;
(d) generating a trajectory of the exoskeleton (1) by data processing means (11b) of the second server (10b) by using said second neural network.

12. Method according to claim 11, said exoskeleton (1) receiving a human operator, the step (d) comprising the determining of a sequence of n-tuples of walking parameters of the exoskeleton (1) desired by said operator, and the trajectory of the exoskeleton (1) is generated according to said sequence of n-tuples.

13. Method according to claim 12, wherein the generated trajectory of the exoskeleton (1) comprises for each n-tuple of said sequence a new periodic elementary trajectory and a transition to this new periodic elementary trajectory.

14. Method for setting an exoskeleton (1) in motion having a plurality of degrees of freedom of which at least one degree of freedom is actuated by an actuator controlled by data processing means (11c), the method comprising a step (e) of the data processing means (11c) of the exoskeleton (1) executing a trajectory of the exoskeleton (1) generated by means of the method for generating a trajectory of the exoskeleton (1) according to one of claims 11 to 13, in such a way as to make said exoskeleton (1) walk.

15. System comprising a first server (10a), a second server (10b) and an exoskeleton (1) each comprising data processing means (11a, 11b, 11c), **characterised in that** said data processing means (11a, 11b, 11c) are configured to implement a method according to one of claims 1 to 10 for learning parameters of a neural network for generating trajectories of the exoskeleton (1), a method according to one of claims 11 to 13 for generating a trajectory of the exoskeleton (1), and/or a method according to claim 14 for setting the exoskeleton (1) in motion.

16. Computer program product comprising code instructions which,

• when the program is executed by a first server, causes the latter to execute the steps of the method according to one of claims 1 to 10 for learning parameters of a neural network for generating trajectories of an exoskeleton (1),
• when the program is executed by a second server, causes the latter to execute the steps of the method according to one of claims 11 to 13 for generating a trajectory of an exoskeleton (1), and/or
• when the program is executed by data processing means of the exoskeleton, causes the latter to execute the steps of the method according to claim 14 for setting the exoskeleton (1) in motion.

17. Means of storage that can be read by a piece of IT equipment on which a computer program product comprises code instructions which:

• when the program is executed by a first server, causes the latter to execute the steps of the method according to one of claims 1 to 10 for learning parameters of a neural network for generating trajectories of an exoskeleton (1),
• when the program is executed by a second server, causes the latter to execute the steps of the method according to one of claims 11 to 13 for generating a trajectory of an exoskeleton (1), and/or
• when the program is executed by data processing means of the exoskeleton, causes the latter to execute the steps of the method according to claim 14 for setting the exoskeleton (1) in motion.

FIGURE 1

FIGURE 2

FIGURE 3

FIGURE 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7153242 B
- US 2016038371 A
- EP 2231096 A
- WO 2018130784 A
- WO 2015140352 A
- WO 2015140353 A

**Littérature non-brevet citée dans la description**

- **KAJITA S., K. F.** Biped Walking pattern génération by using preview control of Zero-Moment Point. *ICRA,* 2003, 1620-1626
- **THOMAS GURRIET et al.** Towards Variable Assistance for Lower Body Exoskeletons. *IEEE Robotics and Automation Letters,* 2019
- **OMAR HARIB et al.** *Feedback Control of an Exoskeleton for Paraplégies Toward Robustly Stable Hands-free Dynamic Walking*